# EUROPEAN PATENT APPLICATION

(11) **EP 4 249 430 A2**
(43) Date of publication of application: **27.09.2023**
(21) Application number: 23185188.2
(22) Date of filing: 21.06.2017
(51) Int. Cl.: C01B 17/76

(54) **INTEGRATED PROCESS FOR THE PRODUCTION OF SULPHURIC ACID AND SULPHUR**

(30) Priority: 21.06.2016 IT UA20164554
(62) Divisional of application: 17732407.6
(71) Applicant: SAIPEM S.p.A., 20138 Milano (IT)
(72) Inventor: BRUNO, Lorenzo, I-20138 MILANO (IT)
(74) Representative: Croce, Valeria

(57) **Abstract**

The present invention relates to an integrated SNOX/Claus process.

## Description

### Technical field of the invention

The present invention finds application in the field of filtration of gases produced by boilers in thermal power plants. Such thermal power plants are in particular integrated into refinery plants. Another application of the invention is for the filtration of off-gases from various combustion processes.

### Background art

A refinery plant is a very complex structure, within which heavy crude processing systems for the production of hydrocarbons and important by-products for the petrochemical industry are located, and several facilities providing auxiliary services.

Particular mention may be made of waste water treatment systems, thermoelectric power plants, a system for the filtration of flue gases produced by boilers (SNOX/WSA), and a system for the production of liquid sulphur from hydrogen sulphide (Claus system).

### Claus process

As alerady known, the Claus process is used to produce elemental sulphur from hydrogen sulphide extracted from oil or natural gas by amino compounds (MEA-monoethanolamine, DEA-diethanolamine, TEA-triethanolamine).

The reaction mechanism is complex and can be summed up with:

**2H₂S + O₂→ 2S + 2H₂O**

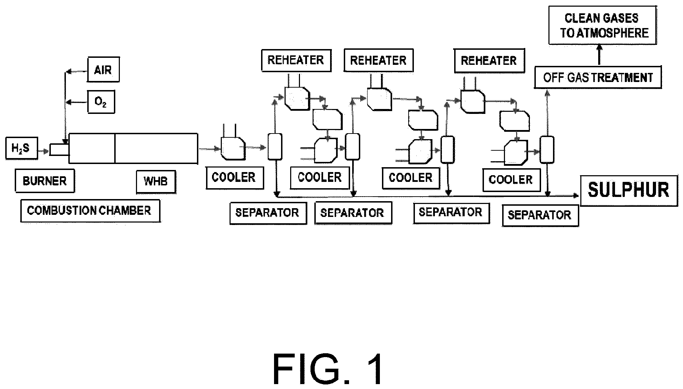

The process is implemented through systems like that shown in figure 1, in the sections of which the process steps are carried out: thermal stage, catalytic stage, condensation stage, purification stage.

### 1) Thermal stage

In the thermal stage, hydrogen sulphide reacts with oxygen in a combustion at a temperature higher than 850°C.

The characteristic reaction of this step is:

**H₂S + 3/2 O₂→ SO₂ + 2H₂O** (ΔH=-4142.2 kJmol⁻¹)

About a third of the total gas is burned with oxygen in stoichiometric quantity at temperatures of about 1400°C.

The oxidation is strongly exothermic and generates sulphur dioxide, which gives rise to further reactions.

The most important of these is the Claus reaction:

**2H₂S + SO₂→ 3S + 2H₂O** (ΔH=-1165.6 kJmol⁻¹)

and the overall reaction is:

**10H₂S + 5O₂→ 2H₂S + SO₂ + 7/2S₂ + 8H₂O**

In the first stage (thermal stage), two thirds of the hydrogen sulphide can be converted to sulphur.

Air (and/or oxygen) is injected into the burner to allow the conversion of one third of the total hydrogen sulphide to sulphur dioxide.

The concentration of oxygen can be preferably equal to or greater than 21% (v/v).

This allows the Claus reaction also in the second step (catalytic stage).

In order to reduce the process gas, oxygen-enriched air may be provided to the thermal stage up to 70%.

This is to be intended as air with a concentration greater than 21% oxygen, equal to or greater than 26% oxygen, equal to or greater than 32% oxygen, equal to or greater than 35% oxygen and, preferably, up to a concentration equal to 70% oxygen (% v/v is intended as the flow rate percentage of oxygen, as a volume, in the flow rate volume of air or enriched air).

In such circumstances, the system is suitably provided with special burners and the process may optionally include recycling in order to control the temperature in the combustion chamber.

In fact the temperature, which is typically about 1300°C when air is used, can reach 1700°C (with oxygen-enriched air at 40%) and 2000°C (with enriched air at 70% oxygen).

60-70% of the total elementary sulphur produced by the Claus process is obtained in the thermal stage.

The hot gas from the combustion chamber passes through the tubes of a process gas cooler, normally consisting of a WHB (Waste Heat Boiler), and it is cooled, thereby condensing the formed sulphur.

Sulphur is removed in output from the gas cooler and stored in liquid form or after solidification.

### 2) Catalytic stage

As mentioned above, the Claus reaction continues in the catalytic stage with activated alumina (III), titanium oxide (IV) and vanadium, to increase the conversion yield.

At this stage, hydrogen sulphide reacts with sulphur dioxide, thereby producing elemental sulphur gas, according to the reaction:

**2H₂S + SO→ 23S + H₂O (ΔH=-1165.6 kJmol⁻¹)**

Sulphur recovery takes place in sub-stages, each of which involves: a gas heater, a Claus catalytic reactor, a gas cooler and a gas condenser.

The number of Claus catalytic stages (or sub-stages) is generally three in order to obtain the best performance (up to 97%).

Catalytic conversion is optimized at low temperatures; however, each bed must operate at a temperature higher than that of sulphur condensation.

In the first catalytic sub-stage, the temperature is about 315-330°C to promote the decomposition of COS and CS₂.

In the second sub-stage it is normally equal to 240°C and in the third about 200°C.

### 3) Condensation stage

Sulphur condensation is obtained by cooling the gas from the catalytic reactor to a temperature of about 150°C-130°C.

### 4) Purification stage

The theoretically achievable conversion does not exceed 96-97%.

In order to obtain a removal of hydrogen sulphide of 99.8%, the gas leaving the system (called "tail gas") which still contains unreacted hydrogen sulphide and sulphur dioxide are sent to the treatment section.

Therein, SO₂ is reduced to hydrogen sulphide, which is reabsorbed by an amine stream, which in a suitable regeneration unit again releases hydrogen sulphide (SCOT system), then recycled to the Claus system.

The tail gas coming out from the hydrogen sulphide absorption unit is sent to a thermal or catalytic incinerator for elimination by burning the residual hydrogen sulphide.

### SNOX/WSA system

The SNOX/WSA system is used for the removal of sulphur dioxide contained in the flue gas from boilers or from off gas from the combustion of hydrogen sulphide, from FCC (Fluid Catalytic Cracking), exhausted hydrogen sulphide incineration, etc.

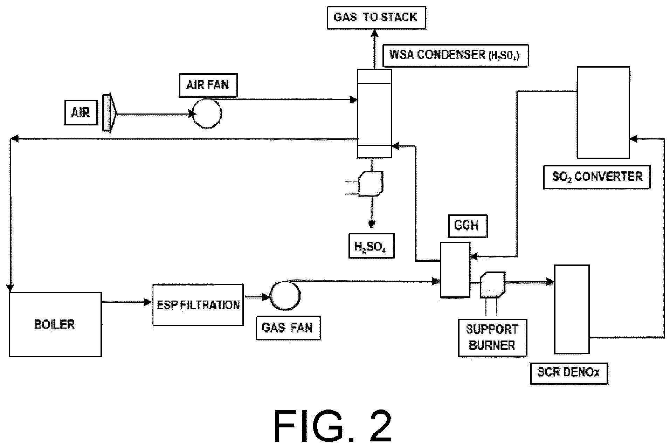

The system essentially comprises a reaction section, a gas cooling section and a condensation section, as schematically shown in figure 2.

### 1) Reaction section

In this section, the sulphur dioxide reacts catalytically with oxygen to give sulphur trioxide. The reaction, conducted at about 400°C, is as follows:

**SO₂ + ½ O₂→SO₃**

The reactor may optionally be associated with a reactor for NOx removal.

### 2) Cooling section

The off gas from the catalytic reaction section is cooled down to a temperature of about 260°C. A part of sulphur trioxide is combined with water vapour, yielding sulphuric acid vapours, as shown hereinafter:

**SO₃ + H₂O₍ᵥ₎→ H₂SO₄₍ᵥ₎**

### 3) Condensation section

In a glass tube heat exchanger, gas is cooled with air, thus completing the condensation of sulphuric acid:

**SO₃ + H₂O₍ᵥ₎→ H₂SO₄₍ᵥ₎**

**H₂SO₄₍ᵥ₎→H₂SO₄₍ₗ₎**

Sulphuric acid thus condensed, once cooled, is stored to be then used as a by-product.

The presence of the two systems described above involves the production of two different by-products: sulphur and sulphuric acid, which must be managed.

In addition, the two different gas treatments (from SNOX/WSA and the tail gases from the Claus process) involve the presence of two different sources of emissions.

The prior-art document DE 2430909 discloses a process for the preparation of sulphur from the Claus process and sulphuric acid from a stream of gas containing H₂S; in particular, it is produced diluted sulphuric acid through a first step producing SO₂ from H₂S followed by a step of wet catalyst performed at a temperature of less than 100°C.

Prior-art document EP 633219 discloses a process integrating a Claus process with a process for the production of sulphuric acid which is not a SNOX/WSA process; in addition, it discloses an integration wherein the tail gas is sent to the combustion chamber.

### Summary of the invention

The authors of the present invention have surprisingly found that a process for the purification of gases may be integrated with a process for the production of sulphur.

### Object of the invention

According to a first object, a process for the production of sulphur is described.

According to another object, the invention describes a process for the preparation of sulphuric acid.

According to a preferred aspect, the present invention further provides an integrated process for the preparation of sulphur and sulphuric acid.

According to a second object, systems implementing the processes of the present invention are described.

According to another object, the use of sulphuric acid obtained from a SNOX/WSA system for controlling the temperature in the thermal stage of a Claus process is described.

According to a further subject, the present invention describes the use of tail gas from a Claus plant for the production of sulphuric acid in a SNOX/WSA system.

### Brief description of the drawings

Figure 1 shows a simplified diagram of a Claus system usually employed;
Figure 2 shows a simplified diagram of a typical SNOX/WSA system;

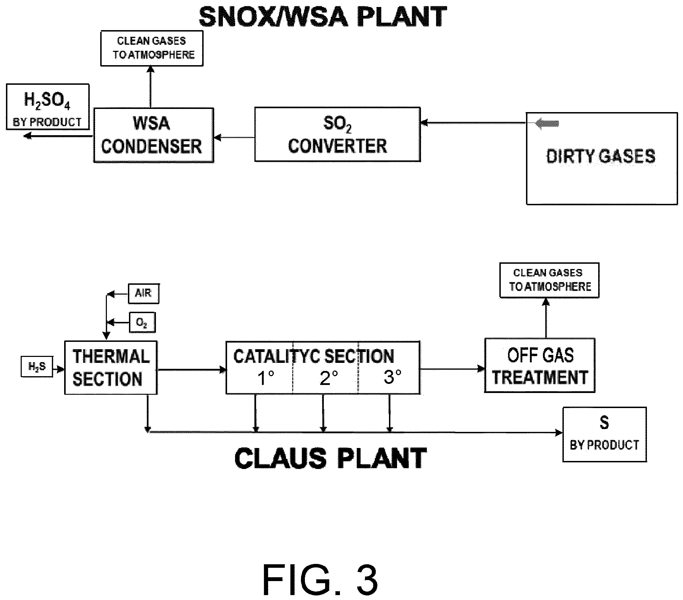

Figure 3 shows block diagrams of a Claus system and a SNOX/WSA system, not integrated;
Figure 4 shows a block diagram of an integrated system according to the present invention;

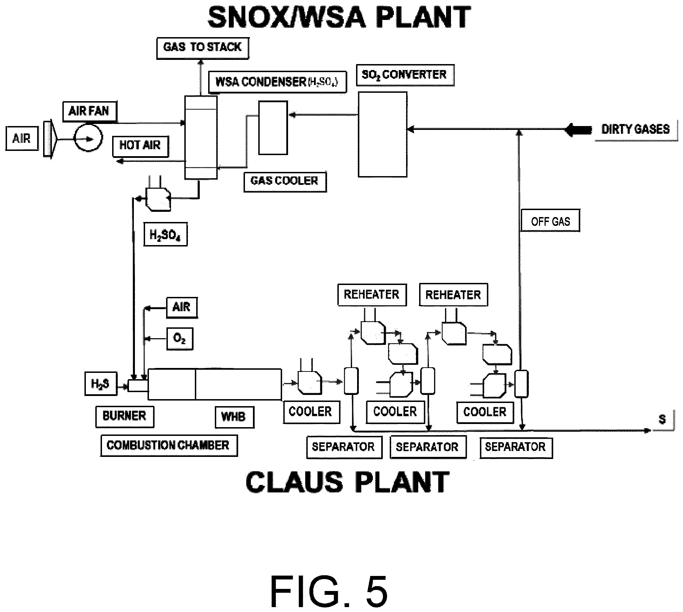

Figure 5 shows an integrated system according to the present invention;
Figure 6 shows a system for revamping the traditional Claus with enriched air;
Figure 7 shows a system for revamping the Claus according to the present invention.

### Detailed description of the invention

According to an object of the present invention, an integrated process for the production of sulphur and the production of sulphuric acid is described.

In particular, the process for the production of elemental sulphur is carried out in a Claus plant and the process for the production of sulphuric acid is carried out in a SNOX/WSA plant.

The process integration can be carried out according to one of the following methods:
a) SNOX/WSA**→**Claus integration;
b) Claus**→**SNOX/WSA integration.

These methods may be provided alternatively or in combination.

### a) SNOX/WSA→Claus integration

In this embodiment, the sulphuric acid produced in the condensation section WSA of the SNOX system (tail) is sent to the combustion chamber of the Claus system (head).

The following reactions take place within the combustion chamber:

**H₂SO₄₍ₗ₎→ H₂SO₄₍ᵥ₎** (69kJmol-¹)

**H₂SO₄₍ᵥ₎→ SO₃ + H₂O** (101kJmol⁻¹)

**SO₃ →2SO₂ + O₂** (99kJmol⁻¹)

which overall can be summarized with the following reaction:

**H₂SO₄ →SO₂ + ½ O₂ + H₂O**

The use of sulphuric acid into the combustion chamber of the Claus process allows the temperature to be lowered and controlled while avoiding the use of enriched air (=O₂> 21%).

In fact, part of the oxygen required is obtained as the product of the sulphuric acid decomposition.

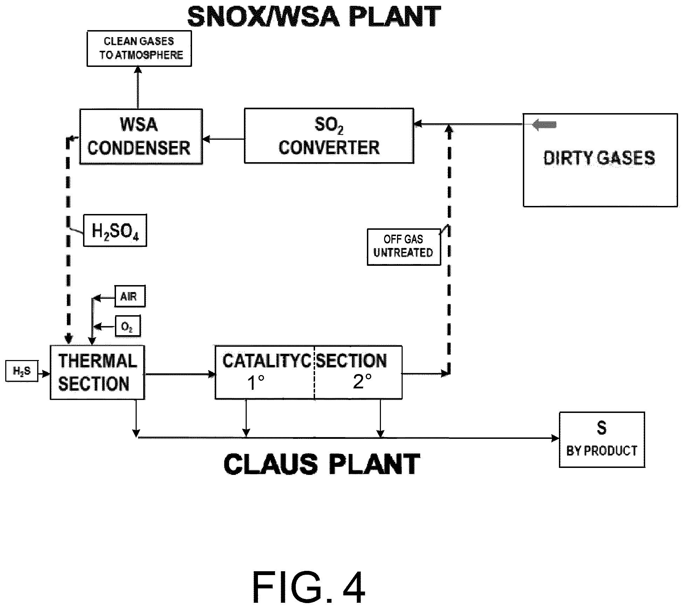

In case in the Claus enriched air is used, the use of sulphuric acid allows to avoid structural modifications such as: *ad hoc* design of the chamber, introduction of suitable gas recycling or the addition of a further combustion unit, comprising the boiler for carrying out the combustion in two steps and a cooler (such as shown in figure 4) or the use of gas, such as air, which act as thermal moderators.

The latter option is particularly disadvantageous, as it causes a "dilution" of gases and by increasing the gas volumes circulating within the system, it requires greater sizing of its structure, thereby resulting in increased CAPEX.

The gas volume reduction and the higher efficiency allow to reduce the volume of tail gases to be treated.

In addition, the injection of sulphuric acid results in a reduction of the volume of tail gas which is inversely proportional to the increase of the oxygen for the enrichment; for example, an increase of 10% of the enrichment oxygen (such as 21 to 31%) results in a reduction of about 10% of the volume of tail gas.

The optimum temperature of the combustion chamber is advantageously about 850°C, which promotes the thermal reaction of the Claus process, rather than the catalytic reaction.

The SNOX/WSA**→**Claus integration also allows to manage those situations in which in the Claus reaction there is a defect of hydrogen sulphide with respect to sulphur dioxide from the sulphuric acid provided by the SNOX/WSA system.

In fact, hydrogen sulphide may be formed from sulphur dioxide due to the contribution of methane using the following reaction:

**SO_{2 +} CH₄ + 1/2 O₂→H₂S + H₂O + CO₂**

This solution is preferably adopted when the molar ratio H₂S/SO₂ is less than 2 (i.e. < stoichiometric ratio) .

According to a further object of the present invention, this process is used in the so-called revamping of the Claus system.

In fact, in some circumstances, it is necessary to increase the capacity of the Claus system to convert the hydrogen sulphide from the sections with off gases, rich in sulphur compounds, into sulphur.

Such an increase is largely determined by the amount of enriched air used.

The possibility to change the combustion agent, for example by using oxygen-enriched air, is particularly disadvantageous; in fact, when achieving oxygen percentages higher than 45%, it is necessary to make significant structural changes to the combustion chamber, for example adding air recycling or a pre-chamber with a pre-WHB (pre-Waste Heat Boiler), such as shown in figure 4, due to the high temperatures which can be achieved (even higher than 1000°C than those under normal conditions with non-enriched air).

In such circumstances, it is therefore particularly advantageous to integrate a Claus system with a WSA system for the production of sulphuric acid, as described above.

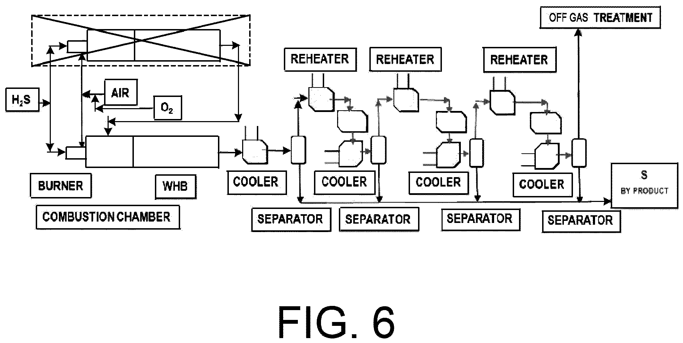

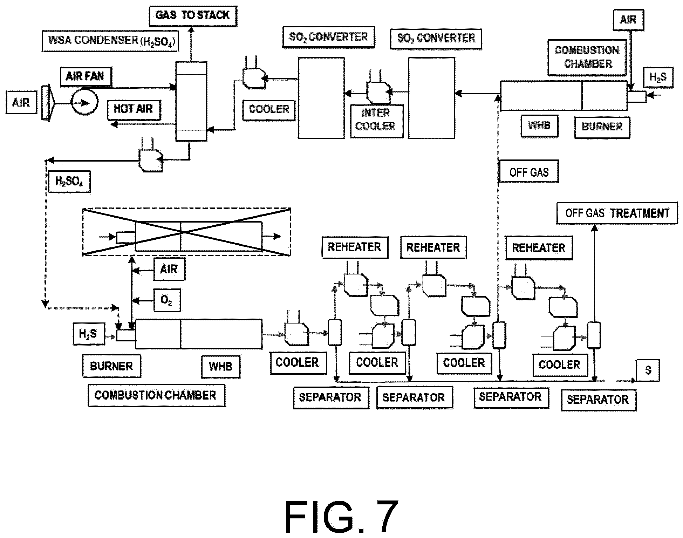

Figure 6 shows a scheme of the Claus system with revamping where the sections which can be eliminated are indicated, and figure 7 shows the diagram of the same system according to the embodiment described above.

According to what is described above, the process of the invention for the production of sulphur from a gas comprising hydrogen sulphide which implements the SNOX/WSA**→**Claus integration comprises the steps of:
a) subjecting such gas to a thermal stage in the presence of oxygen so as to obtain the partial conversion of the hydrogen sulphide into sulphur and a gas comprising unconverted hydrogen sulphide, sulphur dioxide and water vapour;
b) subjecting the gas obtained from step a) to a catalytic stage in the presence of suitable catalysts, so as to obtain the partial conversion of the hydrogen sulphide into sulphur, water vapour and a tail gas comprising hydrogen sulphide;
c) subjecting the sulphur to condensation;
characterized in that step a) is carried out in the presence of sulphuric acid obtained by a SNOX/WSA process (Wet Sulphuric Acid process).

In particular, the sulphuric acid used in step a) preferably has a concentration of about 93-98%, more preferably of about 96-98% or even more preferably of about 98%.

More in detail, the sulphuric acid obtained by a SNOX/WSA process is directly subjected to the thermal stage of a Claus process, without an intermediate storage step.

Obviously, the sulphuric acid will generate oxygen during the thermal stage; therefore, it is equivalent to say that step a) is carried out in the presence of oxygen resulting from the dissociation of the sulphuric acid obtained from a SNOX/WSA process and injected into the combustion chamber of the Claus process.

Even more in detail, the process of the invention comprises the steps of:
a') subjecting a gas containing sulphur dioxide to a catalytic oxidation step in the presence of oxygen so as to obtain a gas comprising sulphuric anhydride;
b') subjecting such a gas comprising sulphuric anhydride to a cooling step in the presence of vapour phase water so as to obtain an aqueous solution of sulphuric acid; and the steps of
c') subjecting a gas comprising hydrogen sulphide to a thermal stage in the presence of oxygen and sulphuric acid obtained from step b') so as to obtain the partial conversion of the hydrogen sulphide into sulphur and a gas comprising unconverted hydrogen sulphide, sulphur dioxide and water vapour;
d') subjecting the gas obtained from step c') to a catalytic stage in the presence of suitable catalysts, so as to obtain the partial conversion of the hydrogen sulphide into sulphur, water vapour and a tail gas comprising hydrogen sulphide;
e') subjecting the sulphur to condensation.

In a preferred aspect of the invention, steps a') and b') are carried out in a SNOX/WSA system, while steps c'), d') and e') are carried out in a Claus system, where the two systems are functionally connected; therefore, steps c'), d') and e') are carried out separately but in integration with steps a') and b').

According to the present invention, the sulphuric acid produced in step b') above has a concentration of about 93-98%, preferably of 96-98% and more preferably of 98%.

In an even more preferred embodiment of the invention, the gas used in the process is a gas produced by the combustion of hydrocarbons rich in sulphur compounds and is rich in hydrogen sulphide and other gases.

In the present description, the amount of hydrogen sulphide comprised is also indicated as "hydrogen sulphide injected".

More in particular, such a gas may have the following concentration of the main components:

| **GAS** | **Concentration (w/w, wt = weight)** |
|---|---|
| H₂S (hydrogen sulphide injected) | 40÷80% Wt |
| CO₂ | 5÷15% wt |
| NH₃ | 0÷30% wt |
| HC | 0÷2% wt |
| H₂O | 2÷25% wt |

The thermal stage of the present invention is carried out at a temperature of between about 850-2000, preferably of between about 850-1400°C and even more preferably > 850°C.

In a preferred aspect, the oxygen combustion agent is present in a percentage of about 21%.

According to an even more preferred aspect, the oxygen may be present in a concentration equal to or greater than 21% oxygen, equal to or greater than 26% oxygen, equal to or greater than 32% oxygen, equal to or greater than 35% oxygen and, preferably, up to a concentration equal to or greater than 70% oxygen (% v/v is intended as the flow rate percentage of oxygen, as a volume, in the flow rate volume of air or enriched air).

For the purposes of the present invention, the amount of sulphuric acid which can be used in the combustion step a) (also referred to as "sulphuric acid from SNOX") is determined according to certain parameters.

In particular, the following mole ratios are identified hereinafter:

| | | |
|---|---|---|
| **R₀=** | **H₂SO₄/H₂S** | H₂SO₄ from SNOX/H₂S injected (in the combustion chamber) |
| **R₁=** | **SO₂/H₂S** | SO₂ from the combustion of H₂S with oxygen from the dissociation of H₂SO₄ and |
| | | H₂S injected |
| **R₂=** | **SO₂/H₂S** | SO₂ from the combustion of H₂S with oxygen from the dissociation of H₂SO₄/H₂S injected |
| **R₃=** | **SO₂/H₂S** | SO₂ from the combustion of H₂S with injected oxygen/injected H₂S |
| **R₄=** | **SO₂/H₂S** | total SO₂ (from sulphuric acid and from the combustion of hydrogen sulphide)/H₂S in the combustion chamber downstream of the partial combustion |

The optimal ratio is R4 = 0.5.

If R₀<0.33, in order to obtain R₄=0.5, a part of SO₂ is obtained by the combustion of H₂S with external oxygen.

Therefore, integration is possible.

If R₀=0.33, R₁=0.33 and R₂=0.11; therefore, in order to obtain R₄=0.33, it is necessary to bring R₃=0. In practice, part of the SO₂ will be produced by the dissociation of sulphuric acid and part by the combustion of H₂S with the oxygen from the dissociation of sulphuric acid. For values of R₀ close to 0.33, it may be necessary to burn some fuel to maintain the thermal profile in the combustion chamber, with less advantage of the integration.

If 0.33<R₀<0.5 and 0.33<R₁<0.5 and 0.11<R₂ is required to maintain R₄>0.5. In this case, the SO₂ from the dissociation of sulphuric acid and the combustion of H₂S with the oxygen from the dissociation of sulphuric acid may lead to an excess of SO₂. It could be necessary to introduce a combustion agent for its reduction, which burns part of the oxygen from the sulphuric acid dissociation. Moreover, as in the case above, it would be necessary to burn some fuel to maintain the suitable temperature profile in the combustion chamber. Therefore, for these values of R0, the integration is less advantageous than the previous case.

If 0.5<R₀ in any case there is R₄>0.5, therefore in this case there will be an amount of SO₂ from the dissociation of the excess sulphuric acid with respect to the stoichiometric amount and the case of R₁>0.5 and values of R₄>0.5 may happen, resulting in a non-optimum functioning of the Claus process. In order to reduce the value of SO₂ in the combustion chamber so as to have R₄> 0.5, methane must be injected:

**SO₂ + CH₄ + 1/2 O₂ → H₂S + H₂O + CO₂**.

More reduction reactions will occur in the combustion chamber than in the previous case. In addition, controlling the stoichiometry of the Claus reaction becomes more complex, having to also intervene on methane, and the consumption thereof would be much greater than in the previous cases.

According to an embodiment of the present invention, the tail gas coming out of the catalytic section is a mixture comprising COS, CS₂, S₂, H₂S, SO₂, CO₂, H₂, H₂O, N₂.

Typically, the composition is about as follows:

| **Gas** | **% (v/v)** |
|---|---|
| COS | 0.05 |
| CS₂ | 0.04 |
| S₂ | 0.05 |
| H₂S | 0.85 |
| SO₂ | 0.42 |
| CO₂ | 2.37 |
| H₂ | 1.60 |
| H₂O | 33.10 |
| N₂ | 61.30 |

Preferably, such a tail gas comprises: H₂S, COS and CS₂ and SO₂.

Moreover, the catalysts of step b) are catalysts known in the field for such applications.

According to a further object, the present invention describes a system for implementing the modified Claus process as described above.

In particular, one or more of the following modifications will be possible:
i) modification of the combustion chamber to allow the injection of sulphuric acid obtained by a SNOX/WSA process;
ii) modification of the combustion chamber to allow the injection of enriched air;
iii) elimination of at least one catalytic section (catalytic sub-stage), preferably the last catalytic section (catalytic sub-stage) of the Claus system;
(iv) elimination of the tail gas treatment section;
(v) reduction of the tail gas treatment section dimensions;
vi) functional connection between the tail gas pipelines with the combustion chamber of a SNOX/WSA system.

More in particular, such a system comprises:
- a combustion section for the production of sulphur and a gas comprising unreacted hydrogen sulphide;
- a catalytic section comprising one or more areas of catalytic sub-stages for the production of sulphur and of a tail gas;
wherein said catalytic section is operatively connected to the catalytic oxidation section of a system for the production of sulphuric acid from sulphur dioxide.

According to a preferred aspect of the invention, the system for the production of sulphuric acid from sulphur dioxide mentioned above is a SNOX/SWA system.

### b) Claus→SNOX/WSA integration

According to another object of the present invention, a process for the production of sulphuric acid is described, wherein the Claus**→**SNOX/WSA integration is implemented.

In this embodiment, the tail gas from the catalytic stage of the Claus system is sent to the reaction section of the SNOX/WSA system.

According to a preferred embodiment of the invention, such a process comprises the steps of:
f) subjecting a gas containing sulphur dioxide to a catalytic oxidation step in the presence of oxygen so as to obtain a gas comprising sulphuric anhydride;
g) subjecting such a gas to a cooling step in the presence of vapour phase water so as to obtain an aqueous solution of sulphuric acid;
wherein step f) is carried out in the presence of sulphur dioxide obtained by oxidation of the gases contained in the tail gas produced by a Claus process.

Preferably, in step g) sulphuric acid having a concentration of about 93-98%, preferably of 96-98% and even more preferably of 98& is obtained.

For the purposes of the present invention, the tail gas from the catalytic section is a mixture comprising COS, CS₂, S₂, H₂S, SO₂, CO₂, H₂, H₂O, N₂.

Typically, the composition is about as follows:

| **Gas** | **% (v/v)** |
|---|---|
| COS | 0.05 |
| CS₂ | 0.04 |
| S₂ | 0.05 |
| H₂S | 0.85 |
| SO₂ | 0.42 |
| CO₂ | 2.37 |
| H₂ | 1.60 |
| H₂O | 33.10 |
| N₂ | 61.30 |

Preferably, such a tail gas comprises: H₂S, COS and CS₂ and SO₂.

Therefore, the following oxidation reactions take place into the conversion reactor:

**H₂S + 3/2 O₂→SO₂ + 2H₂O**

**COS + 3/2 O₂→SO₂ + CO₂**

**CS₂ + 2 O₂→2SO₂ + CO₂**

**SO₂ + ½ O₂** → **SO₃**

The resulting sulphur trioxide then forms sulphuric acid into the condensation section of the SNOX/WSA system:

**SO₃ + H₂O₍ᵥ₎→ H₂SO₄₍ᵥ₎**

**H₂SO₄₍ᵥ₎ → H₂SO₄₍₁₎**

According to a preferred embodiment of the invention, the process for the production of sulphuric acid in which the Clause**→** SNOX/WSA integration is implemented comprises the steps of:
f') subjecting a gas comprising hydrogen sulphide to a thermal stage in the presence of oxygen so as to obtain the partial conversion of the hydrogen sulphide into sulphur and a gas comprising unconverted hydrogen sulphide, sulphur dioxide and water vapour;
g') subjecting the gas obtained from step f') to a catalytic stage in the presence of suitable catalysts, so as to obtain the partial conversion of the hydrogen sulphide into sulphur, water vapour and a tail gas; and the steps of:
h') subjecting a gas containing sulphur dioxide to a catalytic oxidation step in the presence of oxygen and the tail gas obtained from step g') so as to obtain a gas comprising sulphuric anhydride;
i') subjecting such a gas to a cooling step in the presence of vapour phase water so as to obtain an aqueous solution of sulphuric acid.

In a preferred aspect of the invention, steps f') and g') are carried out in a Claus system, while steps h') and i') are carried out in a SNOX/WSA system, wherein the two systems are functionally connected; therefore, steps f') and g') are carried out separately but in integration with steps h') and i').

Preferably, in step i') above, the sulphuric acid produced has a concentration of about 93-98%, more preferably of about 96-98% and even more preferably of about 98%.

Advantageously, according to the above disclosed embodiment, it is possible to eliminate at least one section of the catalytic reaction (catalytic sub-stage) of the Claus process and the tail gas treatment step (or at least a downsizing thereof) in order to eliminate or reduce the content of sulphur-containing compounds: H₂S, COS, CS₂, before being released to the atmosphere.

In a preferred aspect of the invention, in particular, the last catalytic section of the Claus process can be eliminated.

More in particular, such a section is the one which is carried out at a temperature of about 200°C, and in any case not higher 240°C.

Therefore, a system which provides for the Claus**→**SNOX/WSA integration may comprise one catalytic Claus reaction section less than a standard system and optionally it may not comprise the tail gas treatment system (or comprise it in smaller dimensions with respect to the traditional systems) for the hydrogenation of COS and CS₂, the hydrogen sulphide absorption and desorption system (SCOT system) and the residual sulphur compound incinerator.

In particular, the reduction in the number of catalytic steps involves a structural simplification of the system, in which entire sections are eliminated, a reduction almost proportional to the costs for the construction (with a reduction of CAPEX) and maintenance of the system.

According to this embodiment, the WSA system can therefore consist of the following units:
- thermal combustion chamber with air of the tail gas containing H₂S;
- fume tube boiler for producing steam;
- multistage catalytic reactor for the conversion of SO₂ with an intermediate cooler with coil for producing steam;
- sulphuric acid condensation tower.

### c) Claus→SNOX/WSA integration and SNOX/WSA→Claus integration

In a preferred aspect of the invention, a process is described in which both the Claus**→**SNOX/WSA integration and the SNOX/WSA→Claus integration are implemented.

According to this embodiment, it is possible not only to use sulphuric acid obtained from a SNOX/WSA system in a Claus process, but also to use the tail gas obtained from the Claus process in a SNOX/WSA process.

According to this preferred aspect, such a process allows the production of sulphur from hydrogen sulphide and sulphuric acid from sulphur dioxide and comprises the steps of:
I) subjecting a gas comprising hydrogen sulphide to a thermal stage in the presence of oxygen and sulphuric acid so as to obtain the partial conversion of the hydrogen sulphide into sulphur and a gas comprising unconverted hydrogen sulphide, sulphur dioxide and water vapour;
II) subjecting the gas obtained from step I) to a catalytic stage in the presence of suitable catalysts, so as to obtain the partial conversion of the hydrogen sulphide into sulphur, water vapour and a tail gas comprising hydrogen sulphide;
III) subjecting the sulphur to condensation;
IV) subjecting the tail gas obtained from step II) to an oxidation step thus obtaining sulphur dioxide;
V) subjecting the sulphur dioxide to a catalytic oxidation step in the presence of oxygen so as to obtain a gas comprising sulphuric anhydride;
VI) subjecting the sulphuric anhydride to a cooling step in the presence of vapour phase water so as to obtain an aqueous solution of sulphuric acid;
VII) sending the sulphuric acid obtained from step VI) to the thermal stage of step I).

In a preferred embodiment of the invention, the sulphuric acid of steps I), VI) and VII) has a concentration of about 93-98%, more preferably of about 96-98% and even more preferably of about 98%.

According to a further object, the present invention describes a system for implementing the modified SNOX/WSA process as described above.

In particular, such a system comprises:
- a section for the combustion of hydrogen sulphide in the presence of oxygen to obtain sulphur dioxide;
- a section for the catalytic oxidation of sulphur dioxide to obtain sulphur trioxide;
- an absorption section for the cooling and condensation of sulphur trioxide, thus obtaining liquid sulphuric acid;
wherein said absorption section is operatively connected to the combustion section of a system for the production of sulphur from hydrogen sulphide.

The system for the production of sulphur from hydrogen sulphide mentioned above preferably is a Claus system.

As described above, a further object of the invention is an integrated system comprising the modified Claus system and a modified WSA system.

Such an integrated system comprises one or more of the modifications of the Claus or SNOX/WSA system as described above.

In particular, such a system comprises:
a) a system for the production of sulphuric acid comprising:
   1) a section for the catalytic oxidation of sulphur dioxide;
   2) a section for cooling the gases obtained from the liquid sulphuric acid oxidation section;
   said integrated system further comprising:
   b) a system for the production of sulphur comprising:
   3) a section for the combustion of hydrogen sulphide in the presence of oxygen to obtain sulphur dioxide;
   4) a section for the catalytic oxidation of the sulphur dioxide so as to obtain sulphuric anhydride and a tail gas rich in unreacted hydrogen sulphide;
   wherein inside said integrated system:
   - said cooling section 2) is functionally connected to the combustion section 3) of a system for the production of sulphur; and
   - said catalytic oxidation section 4) is operatively connected to the catalytic oxidation section 1) for the sulphur dioxide.

For the purposes of the present invention, a "functional" connection is meant to indicate a direct fluid connection between two different system portions, so that the tail gas or the sulphuric acid are directly sent from one portion to the other without an intermediate storage step.

According to further objects of this invention, the direct use of tail gas rich in hydrogen sulphide obtained from the catalytic section of a Claus system/from a Claus process is described, for the production of sulphuric acid in a SNOX/WSA system.

This use further allows to reduce the emission of gases rich in sulphur into the atmosphere.

Likewise, the direct use of sulphuric acid obtained from a SNOX/WSA system/process is described for reducing the temperature of the combustion chamber of a Claus system.

For the present purposes, "direct use" means that the sulphuric acid obtained from a SNOX/WSA process or the tail gases obtained from a Claus process are used directly, without an intermediate storage step.

The man skilled in the art will be able to understand the several advantages of the present invention from the above description.

Firstly, as described, the process integration reduces the number of gas emission points to the atmosphere (the emission point of tail gases is eliminated) as well as the amount of gases themselves, with a clear advantage in terms of environmental impact.

In addition, with regard to by-products, the present invention prevents the production of non-concentrated sulphuric acid (having a concentration of less than 93%) by the SNOX/WSA system, to the advantage of sulphur production.

In fact, handling non-concentrated sulphuric acid (having a concentration of <93% or even less, such as about 50%) is much more problematic than the handling of sulphur, with particular regard to the storage and transportation.

Also in case sulphuric acid is needed, it is preferred to prepare it from sulphur by means of a suitable system built on site, from which there can also be obtained steam.

Another advantage is represented by the possibility to eliminate the treatment unit of tail gases obtained from the Claus process.

More specifically, the SNOX/WSA→Claus integration allows to reduce and control the temperature of the combustion chamber of the Claus system, especially in those circumstances where oxygen-enriched air is introduced.

In addition, the higher yield of combustion reduces the amount of oxygen needed for combustion.

This aspect, combined with a better performance of the combustor (hydrogen sulphide) in the Claus process, leads to a reduction of its size and the size of downstream sections (especially that for treating tail gases), due to the lower concentration of inert aggregates.

As a result, a reduction of investment costs (CAPEX) and operating expenses (OPEX) can advantageously be obtained.

## Claims

1. Process for the production of sulphur from a gas comprising hydrogen sulphide, such process comprising the steps of:
a) subjecting such gas to a thermal stage in the presence of oxygen so as to obtain the partial conversion of the hydrogen sulphide into sulphur and a gas comprising unconverted hydrogen sulphide, sulphur dioxide and water vapour;
b) subjecting the gas obtained from step a) to a catalytic stage in the presence of suitable catalysts, so as to obtain the partial conversion of the hydrogen sulphide into sulphur, water vapour and a tail gas comprising hydrogen sulphide;
c) subjecting the sulphur to condensation; **characterized in that** step a) is carried out in the presence of sulphuric acid obtained by a SNOX/WSA process (Wet Sulphuric Acid process).

2. Process according to claim 1, wherein such step a) is carried out in the presence of an oxygen concentration of about 21-70% (v/v).

3. Process according to any one of the preceding claims, wherein in step a) the hydrogen sulphide is comprised in amounts of about 40-80% (weight/weight).

4. Process according to any one of the preceding claims, comprising the steps of:
a') subjecting a gas containing sulphur dioxide to a catalytic oxidation step in the presence of oxygen so as to obtain a gas comprising sulphuric anhydride;
b') subjecting such a gas comprising sulphuric anhydride to a cooling step in the presence of vapour phase water so as to obtain an aqueous solution of sulphuric acid;
c') subjecting a gas comprising hydrogen sulphide to a thermal stage in the presence of oxygen and sulphuric acid obtained from step b') so as to obtain the partial conversion of the hydrogen sulphide into sulphur and a gas comprising unconverted hydrogen sulphide, sulphur dioxide and water vapour;
d') subjecting the gas obtained from step c') to a catalytic stage in the presence of suitable catalysts, so as to obtain the partial conversion of the hydrogen sulphide into sulphur, water vapour and a tail gas comprising hydrogen sulphide;
e') subjecting the sulphur to condensation.

5. Process for the production of sulphuric acid comprising the steps of:
f) subjecting a gas containing sulphur dioxide to a catalytic oxidation step in the presence of oxygen so as to obtain a gas comprising sulphuric anhydride;
g) subjecting such a gas to a cooling step in the presence of vapour phase water so as to obtain an aqueous solution of sulphuric acid;
wherein step f) is carried out in the presence of sulphur dioxide obtained by oxidation of the gases contained in the tail gas produced by a Claus process.

6. Process according to the preceding claim comprising the steps of:
f') subjecting a gas comprising hydrogen sulphide to a thermal stage in the presence of oxygen so as to obtain the partial conversion of the hydrogen sulphide into sulphur and a gas comprising unconverted hydrogen sulphide, sulphur dioxide and water vapour;
g') subjecting the gas obtained from step f') to a catalytic stage in the presence of suitable catalysts, so as to obtain the partial conversion of the hydrogen sulphide into sulphur, water vapour and a tail gas;
h') subjecting a gas containing sulphur dioxide to a catalytic oxidation step in the presence of oxygen and the tail gas obtained from step g') so as to obtain a gas comprising sulphuric anhydride;
i') subjecting such a gas to a cooling step in the presence of vapour phase water so as to obtain an aqueous solution of sulphuric acid.

7. Process according to the preceding claim, wherein step g') is carried out in three catalytic sub-stages.

8. Process according to claim 6, wherein step g') is carried out in two catalytic sub-stages.

9. Process for the production of sulphur and sulphuric acid comprising the steps of:
I) subjecting a gas comprising hydrogen sulphide to a thermal stage in the presence of oxygen and sulphuric acid so as to obtain the partial conversion of the hydrogen sulphide into sulphur;
II) subjecting the gas obtained from step I) to a catalytic stage in the presence of suitable catalysts, so as to obtain the partial conversion of the hydrogen sulphide into sulphur, water vapour and a tail gas comprising hydrogen sulphide;
III) subjecting the sulphur to condensation;
IV) subjecting the tail gas of step II) to an oxidation step thus obtaining sulphur dioxide;
V) subjecting the sulphur dioxide to a catalytic oxidation step in the presence of oxygen so as to obtain a gas comprising sulphuric anhydride;
VI) subjecting sulphuric anhydride to a cooling step in the presence of vapour phase water so as to obtain an aqueous solution of sulphuric acid;
VII) sending the sulphuric acid obtained from step VIto the thermal stage of step I).

10. Process according to claim 1 or 4 or 6 or 9, wherein in step a), c'), f') and I), respectively, hydrogen sulphide can be further employed, produced from sulphur dioxide and methane according to the following reaction:
**SO₂ + CH₄ + 1/2 O₂→H₂S + H₂O + CO₂.**

11. Process according to any one of the preceding claims, wherein the tail gas further comprises carbonyl sulphide, carbon disulphide and sulphur dioxide.

12. Plant for the production of sulphur from hydrogen sulphide comprising:
- a combustion section for the production of sulphur and a gas comprising unreacted hydrogen sulphide;
- a catalytic section comprising one or more areas of catalytic sub-stages for the production of sulphur and of a tail gas comprising hydrogen sulphide;
wherein said catalytic section is operatively connected to the catalytic oxidation section in a plant for the production of sulphuric acid from sulphur dioxide.

13. Plant according to the preceding claim, wherein said plant for the production of sulphuric acid from sulphur dioxide is a SNOX/SWA plant.

14. Plant for the production of sulphuric acid comprising:
- a section for the combustion of hydrogen sulphide in the presence of oxygen to obtain sulphur dioxide;
- a section for the catalytic oxidation of sulphur dioxide to obtain sulphur trioxide;
- an absorption section for cooling and condensing the sulphuric anhydride thus obtaining liquid sulphuric acid;
wherein said absorption section is operatively connected to the combustion section of a plant for the production of sulphur from hydrogen sulphide.

15. Plant according to the preceding claim, wherein said plant for the production of sulphur from hydrogen sulphide is a Claus plant.

16. Integrated plant for the production of sulphur and of sulphuric acid comprising:
a) a plant for the production of sulphuric acid comprising:
1) a section for the catalytic oxidation of sulphur dioxide;
2) a section for cooling the gases obtained from the liquid sulphuric acid oxidation section;
said integrated plant further comprising:
b) a plant for the production of sulphur comprising:
3) a section for the combustion of hydrogen sulphide in the presence of oxygen to obtain sulphur dioxide;
4) a section for the catalytic oxidation of the sulphur dioxide so as to obtain sulphuric anhydride and a tail gas rich in unreacted hydrogen sulphide;
wherein inside said integrated plant:
- said cooling section 2) is operatively connected to the combustion section 3) of a plant for the production of sulphur; and
- said catalytic oxidation section 4) is operatively connected to the catalytic oxidation section 1) for the sulphur dioxide.
